(19) Europäisches Patentamt
European Patent Office
Office européen des brevets

(11) EP 1 618 238 B2

(12) NOUVEAU FASCICULE DE BREVET EUROPEEN
Après la procédure d'opposition

(45) Date de publication et mention de la décision concernant l'opposition:
**30.07.2014 Bulletin 2014/31**

(45) Mention de la délivrance du brevet:
**29.09.2010 Bulletin 2010/39**

(21) Numéro de dépôt: **04742522.8**

(22) Date de dépôt: **16.04.2004**

(51) Int Cl.:
***D04H 1/42*** (2012.01) ***D04H 1/58*** (2012.01)
***C09J 177/06*** (2006.01) ***C08K 7/14*** (2006.01)
***E04B 1/74*** (2006.01) ***C03C 27/10*** (2006.01)
***C09J 177/00*** (2006.01)

(86) Numéro de dépôt international:
**PCT/FR2004/000941**

(87) Numéro de publication internationale:
**WO 2004/094714 (04.11.2004 Gazette 2004/45)**

# (54) COMPOSITION D ENCOLLAGE DE FIBRES MINERALES RENFERMANT UN POLYACIDE CARBOXYLIQUE ET UNE POLYAMINE, PROCEDE DE PREPARATION, ET PRODUITS RESULTANTS

MINERALFASERPLATTEN SCHLICHTEZUSAMMENSETZUNG MIT EINEM POLYSAURE UND EINER POLYAMIN, VERFAHREN ZUR HERSTELLUNG SOWIE DEREN PRODUKTE

MINERAL FIBRE SIZING COMPOSITION CONTAINING A CARBOXYLIC POLYACID AND A POLYAMINE, PREPARATION METHOD THEREOF AND RESULTING PRODUCTS

(84) Etats contractants désignés:
**AT BE BG CH CY CZ DE DK EE ES FI FR GB GR HU IE IT LI LU MC NL PL PT RO SE SI SK TR**

(30) Priorité: **16.04.2003 FR 0304750**

(43) Date de publication de la demande:
**25.01.2006 Bulletin 2006/04**

(73) Titulaire: **SAINT-GOBAIN ISOVER**
**92400 Courbevoie (FR)**

(72) Inventeurs:
- **ESPIARD, Philippe**
  **F-60270 Gouvieux (FR)**
- **DOLATKHANI, Marc**
  **F-33610 Cestas (FR)**
- **PAGNOUX, Anne**
  **F-33114 Le Barp (FR)**
- **BOYER, François**
  **F-33650 Martillac (FR)**

(74) Mandataire: **Jamet, Vincent**
**Saint-Gobain Recherche,**
**39, quai Lucien Lefranc**
**93300 Aubervilliers (FR)**

(56) Documents cités:
**EP-A1- 0 612 880** **EP-A2- 0 445 578**
**EP-A2- 0 826 710** **WO-A1-02/06178**
**WO-A1-99/36368** **US-A- 2 908 584**
**US-A- 4 074 988** **US-A- 5 690 856**

- **PATENT ABSTRACTS OF JAPAN vol. 008, no. 246 (C-251), 10 novembre 1984 (1984-11-10) & JP 59 126484 A (MITSUI SEKIYU KAGAKU KOGYO KK), 21 juillet 1984 (1984-07-21)**

EP 1 618 238 B2

## Description

La présente invention se rapporte au domaine des compositions d'encollage pour fibres minérales. Elle a trait plus précisément à l'utilisation d'un encollage aqueux qui comprend un polyacide carboxylique et une polyamine, et aux produits à base de fibres minérales revêtues de cet encollage.

La plupart des produits isolants thermiques et/ou acoustiques contenant des fibres minérales nécessitent l'emploi d'un encollage qui lie les fibres et apporte la tenue mécanique adaptée à l'usage auquel on les destine. Les produits doivent en outre avoir suffisamment de cohésion et de rigidité pour résister aux diverses manipulations avant la mise en place finale.

L'encollage est appliqué sur des fibres obtenues de différentes manières selon la nature du minéral utilisé (verre, roche, ...), notamment par la technique connue du fibrage centrifuge interne ou externe. La centrifugation interne consiste à introduire la matière en fusion dans un dispositif centrifuge comprenant une multitude de petits orifices, la matière étant projetée vers la paroi périphérique du dispositif sous la forme de filaments de longueur variable. A la sortie du dispositif, les filaments sont étirés et entraînés vers un courant gazeux à haute température et à vitesse élevée vers un organe récepteur pour former une nappe de fibres réparties de manière aléatoire.

Pour assurer l'assemblage des fibres entre elles, on projette sur les fibres à la sortie du dispositif centrifuge la composition d'encollage contenant la résine thermodurcissable.

La nappe de fibres revêtues de l'encollage est ensuite traitée thermiquement à une température généralement supérieure à 100°C, pour réaliser la réticulation de la résine et obtenir ainsi un produit durci ayant les propriétés requises pour former un produit d'isolation thermique et/ou phonique, notamment une stabilité dimensionnelle, une résistance à la traction, une reprise d'épaisseur après compression et une couleur homogène.

L'opération d'encollage doit être menée dans des conditions permettant d'obtenir une répartition homogène de l'encollage sur les fibres. Notamment, il convient d'éviter la formation de mèches de fibres entourées d'une gangue, dispersées au sein de fibres non liées susceptibles de se casser facilement et donc de générer des poussières. Cette opération vise à obtenir que les fibres soient liées entre elles par des points de jonction suffisamment résistants pour assurer une bonne cohésion et faire en sorte que le produit ne se déchire pas à l'usage. La cohésion doit néanmoins ne pas être trop élevée afin que la liaison reste souple et que le produit final garde une certaine aptitude à la déformation. En particulier, les jonctions entre les fibres doivent permettre d'obtenir un réseau suffisamment stable et rigide pour résister à la compression imposée pour le stockage et le transport, et satisfaire les spécifications annoncées par le fournisseur au moment de la pose.

Dans les conditions du procédé, l'encollage est comme indiqué précédemment pulvérisé sur les fibres en cours de formation. Par conséquent, l'encollage doit présenter une faible viscosité à l'état non réticulé et tendre rapidement vers un état plus visqueux avant de donner un réseau polymérique sous l'action de la chaleur. Si la viscosité à l'état non réticulé est trop élevée, l'encollage a tendance à être collant et risque de former des dépôts sur les organes récepteurs lors du traitement thermique de la nappe de fibres.

De nombreux polymères thermoréticulables connus sont aptes à satisfaire les conditions exposées ci-dessus. Cependant, en matière d'isolation, l'essentiel du marché est représenté par des produits de consommation courante pour lesquels le prix est déterminant. Pour ces raisons, des polymères thermoréticulables tels que les polyuréthanes et les époxy à coût élevé ne sont pas actuellement retenus pour une exploitation industrielle même s'ils s'avèrent techniquement acceptables.

Les polymères thermodurcissables les plus utilisés dans les encollages se présentent sous la forme de résines du type phénoplaste (phénol-formol) ou aminoplaste (mélamine-formol ou urée-formol). Dans l'encollage, la résine est généralement associée à de l'eau en tant qu'agent de dilution, de l'urée qui sert à diminuer le taux de formaldéhyde libre et agit aussi comme liant, et divers additifs tels que de l'huile, de l'ammoniaque, des colorants et éventuellement des charges.

Les encollages contenant de telles résines ne donnent pas entière satisfaction car ils sont susceptibles de générer des gaz indésirables, notamment du formaldéhyde, de l'isocyanate de méthyle (MIC) et/ou de l'acide isocyanique (ICA), lorsqu'ils sont portés à plus de 150°C lors de l'étape de réticulation pour former le produit, voire jusqu'à 700°C dans certaines utilisations telles que les fours ménagers.

Diverses solutions ont été proposées pour réduire les émissions indésirables.

Un premier moyen consiste à utiliser des ,encollages minéraux, par exemple contenant du phosphate d'aluminium. Cependant, si ces encollages s'avèrent satisfaisants pour une température atteignant 500°C, voire 700°C, ils présentent d'autres inconvénients : sensibles à l'humidité, ils ont tendance à gonfler au cours du stockage et à délaminer ce qui augmente les risques d'arrachement de portions du produit lors des manipulations.

Un autre moyen de limiter les émissions indésirables est fondé sur l'utilisation d'encollages à base de résines organiques autres que les résines phénol-formol.

Il a été notamment proposé de former des produits à base de fibres minérales au moyen d'un encollage comprenant un polyacide carboxylique et un polyol, de préférence associé à un catalyseur du type sel de métal alcalin

d’acide organique phosphoré (voir EP-A- 0 990 727, EP-A- 0 990 728 et EP-A- 0 990 729). Le polyacide carboxylique est un oligomère ou un polymère ayant de préférence une masse inférieure à10 000 contenant plus d’un groupe carboxylique et le polyol contient au moins deux groupes hydroxyles. Les exemples utilisent un poly(acide acrylique) et la triéthanolamine.

Dans WO-A-93/36368, il est décrit des fibres minérales réticulées au moyen d’un encollage comprenant un ou plusieurs composés renfermant une fonction carboxylique et/ou une fonction β-hydroxyalkylamide. Les exemples de réalisation procèdent par réaction d’anhydride d’acide carboxylique et de diéthanolamine ou de triéthanolamine.

Il est connu de EP-A-1 164 163 un procédé de fabrication de laine de verre qui comprend une étape consistant à faire réagir un encollage renfermant soit un acide carboxylique et une alcanolamine, soit une résine préalablement synthétisée à partir d’un acide carboxylique et d’une alcanolamine, et un polymère contenant un groupe carboxylique.

Dans EP-A-1 170 265, il a été proposé de préparer des encollages en deux étapes consistant à mélanger un anhydride et une amine dans des conditions réactives jusqu’à ce que l’anhydride soit substantiellement solubilisé dans l’amine et/ou ait réagi avec elle, puis à ajouter de l’eau et terminer la réaction.

Enfin, dans EP-A-1 086 932, on propose un encollage pour de la laine minérale qui contient une résine comprenant le produit de réaction non polymérique d’une amine avec un premier anhydride et un deuxième anhydride différent du premier.

Bien que satisfaisants au regard de l’émission de gaz indésirables, les encollages précités restent malgré tout moins performants que ceux renfermant les résines classiques phénol-formol. Si les encollages à base de polyacryliques et de p-hydroxyalkylamide conduisent à de bonnes propriétés mécaniques avant vieillissement, ces dernières se dégradent fortement lorsque le produit est exposé à une température supérieure à 40°C en atmosphère fortement humide.

De plus, la réticulation des encollages à base de polyacryliques en général commence à une température de l’ordre de 180°C et elle n’atteint le stade final que si on allonge la durée de traitement à cette température ou qu’on élève la température jusqu’à environ 240°C. Comparativement aux encollages à base de résine phénol-formol, ces conditions sont plus contraignantes et plus coûteuses car elles imposent d’augmenter la longueur des étuves et/ou d’utiliser des moyens de chauffage plus puissants. Les polyacryliques ont aussi tendance à raidir les fibres dans la nappe avant la réticulation avec pour conséquence un rapprochement plus difficile des fibres entre elles et des points de collage moins nombreux.

Il convient de noter encore que les encollages à base de polyesters sont plus difficiles à mettre en oeuvre parce qu’ils forment des mèches collantes sur les dispositifs de convoyage de la nappe.

Il existe un besoin de disposer de compositions d’encollage présentant un faible niveau d’émission en gaz indésirables afin de satisfaire au mieux les exigences en matière d’environnement, et qui conservent les caractéristiques propres aux compositions d’encollage, notamment sont aptes à réticuler dans les conditions habituelles.

La présente invention vise à pallier les inconvénients précités en fournissant une nouvelle utilisation d’une composition d’encollage aqueuse apte à revêtir des fibres minérales pour former notamment des produits d’isolation thermique et/ou acoustique et les produits ainsi obtenus.

L’utilisation de la composition d’encollage aqueuse selon l’invention sur des fibres minérales est correspond à la revendication 1.

Les polyacides carboxyliques, selon l’invention sont l’acide succinique, l’acide glutarique, l’acide adipique, l’acide azélaïque, l’acide sébacique, l’acide tartrique, l’acide phtalique, l’acide tétrahydrophtalique, l’acide citrique, l’acide triméllitique et l’acide butan-1,2,3,4-tétraoïque (BTCA).

Les polyacides carboxyliques précités, peuvent être obtenus de manière connue à partir des acides précités ou des anhydrides correspondants lorsqu’ils existent. A titre d’exemple, on peut citer l’anhydride succinique, l’anhydride glutarique, l’anhydride phtalique, l’anhydride tétrahydrophtalique et l’anhydride triméllitique.

De préférence, le polyacide carboxylique est choisi parmi l’acide citrique ou tartrique, l’acide butan-1,2,3,4-tétraoïque (BTCA). De manière particulièrement préférée, on choisit l’acide tartrique, le BTCA.

La polyamine conforme à l’invention est choisie parmi :

- Les polyamines répondant à la formule générale suivante :

$$H_2N - \left[ (CH_2)_x - NH \right]_y - H$$

dans laquelle
x varie de 2 à 10, de préférence 2 à 4
y varie de 1 à 10.

Avantageusement, on utilise la diéthylènetriamine (DETA), la triéthylènetétramine (TETA) et la tétraéthylènepentamine (TEPA).
- Les polyéthylèneimines, les poly(aminostyrène) et les produits de dégradation de la chitine en milieu basique (chitosanes).

La polyamine conforme à l'invention a une fonctionnalité, exprimée par le nombre de fonctions amines, qui est égale ou supérieure à 2, de préférence inférieure à 200. De manière avantageuse, ces fonctions sont des fonctions amines primaires et/ou secondaires.

De préférence, la polyamine a une masse moléculaire inférieure à 1000 g/mol et de mieux encore inférieure à 500 g/mol.

Les solutions aqueuses de polyamine utiles dans le cadre de l'invention possèdent une teneur pondérale en matière sèche qui varie entre 10 et 50 %, de préférence de l'ordre de 25 %, notamment 18 %.

La composition d'encollage aqueuse est généralement obtenue en diluant ou en émulsionnant dans l'eau le polyacide carboxylique et la polyamine, éventuellement avec les additifs définis plus loin.

Selon un premier mode de réalisation, on forme l'encollage en mélangeant le polyacide carboxylique en solution ou en dispersion aqueuse, de préférence à plus de 10 % en poids, et la polyamine en solution aqueuse, de préférence à plus de 10 % en poids, le cas échéant avec les additifs.

Selon un deuxième mode de réalisation, on réalise un pré-mélange en introduisant la polyamine directement dans la solution ou la dispersion aqueuse du polyacide carboxylique, de préférence à plus de 10 % en poids, puis on ajoute ultérieurement les additifs éventuels.

Ce mode de réalisation permet d'éviter que le polyacide carboxylique réagisse avec la polyamine en formant des produits qui précipitent et rendent l'encollage inutilisable.

Le pré-mélange est généralement effectué dans un dispositif équipé d'un système de refroidissement permettant de contrôler la température du mélange à environ 75°C, de préférence de l'ordre de 70°C, afin d'éviter toute réaction incontrôlée entre le polyacide carboxylique et la polyamine (réaction fortement exothermique). Le pré-mélange est stable et peut être notamment stocké à 20°C pendant plusieurs jours avant d'être utilisé dans l'encollage.

La composition d'encollage aqueuse ainsi formée comprend généralement, exprimées en parties de matière sèche, de 20 à 80 parties en poids de polyacide carboxylique et de 80 à 20 parties en poids de polyamine.

La composition d'encollage aqueuse comprend les additifs suivants, pour 100 parties en poids de matière sèche de polyacide carboxylique et de polyamine:

- 0 à 20 parties d'une huile, de préférence 6 à 15 parties
- 0 à 2 parties d'un silane, de préférence de l'ordre de 0,4 partie
- 0 à 5 parties d'un catalyseur
- 0 à 20 parties d'un plastifiant

Le rôle bien connu des additifs précités est brièvement rappelé ici :

- l'eau a un rôle de lubrifiant, permet d'ajuster la viscosité aux conditions de pulvérisation, de refroidir les fibres et de limiter les phénomènes de pré-gélification,
- l'huile assure la lubrification des fibres, permet de réduire les poussières susceptibles d'être générées lors de la manipulation des produits finis (nappes isolantes par exemple) et améliore la sensation au toucher. Elle est généralement inerte vis à vis des autres constituants et apte à être émulsionnée dans l'eau. Le plus souvent, il s'agit d'une huile constituée d'hydrocarbures extraits du pétrole,
- le silane assure la liaison entre la fibre minérale et le produit de réticulation du polyacide carboxylique et de la polyamine. Il permet de renforcer les propriétés mécaniques et améliore la résistance au vieillissement. Le silane est généralement un aminosilane, de préférence le $\gamma$-aminopropyltriéthoxysilane,
- le catalyseur permet d'accélérer la vitesse de réaction du polyacide carboxylique et de la polyamine et donc de réduire le temps de séjour de la nappe dans l'étuve. Il est choisi dans le groupe constitué par LiCl, $LiOCOCH_3$, $CaCl_2$, $MgCl_2$, $ZnCl_2$, ZnO et $P(OCH_3)_3$,
- le plastifiant permet de limiter les phénomènes de pré-gélification et d'atténuer la rigidité du produit final. A titre d'exemple, on peut citer les alcools, de préférence les polyols tels que le glycérol, et la triéthanolamine.

Les fibres minérales traitées par l'utilisation selon l'invention de la composition d'encollage aqueuse sont nappées et liées entre elles sous l'action de la chaleur, à une température qui varie de 150 à 250°C, de préférence 180 à 220°C. Sous sa forme réticulée, le liant est solide, infusible et insoluble dans l'eau, et il représente de l'ordre de 1 à 15 % du poids total des fibres. Les produits obtenus peuvent avoir un aspect variable, par exemple une nappe ou un voile de fibres.

Le voile de fibres minérales, notamment de fibres de verre, possède généralement un grammage compris entre 10 et 300 $m^2$/g, et de préférence il comprend au moins 1 %, voire 2 % et même plus de 4 % en poids d'encollage. Bien que pouvant être utilisé seul, le voile est particulièrement destiné à revêtir au moins une face extérieure d'une nappe isolante telle que décrite plus haut.

Les produits obtenus dans le cadre de la présente invention sont notamment destinés à former des isolants thermiques et acoustiques, en particulier pour le bâtiment et les fours ménagers. Ils peuvent également servir de substrats pour la culture hors-sol.

Les exemples suivants, non limitatifs, permettent d'illustrer l'invention.

Dans ces exemples :

- la mesure de la réactivité de l'encollage et les propriétés du liant, après réticulation, sont effectuées par la méthode appelée Dynamic Mechanical Analysis (DMA) qui permet de caractériser le comportement viscoélastique d'un matériau polymérique.

Il est procédé comme suit : un échantillon de papier Whatmann imprégné de la solution d'encollage est fixé horizontalement entre deux mors fixes et un élément oscillant appliqué sur la face supérieure de l'échantillon, muni d'un dispositif de mesure de la contrainte en fonction de la déformation appliquée, permet de calculer le module d'élasticité E. L'échantillon est chauffé à une température variant de 20 à 300 °C à la vitesse de 5°C/min. A partir des mesures, on établit la courbe de variation du module d'élasticité E (en MPa) en fonction de la température (en °C) dont l'allure générale est donnée dans la Figure 1. On détermine sur la courbe la température de début de pré-gélification ($T_{PG}$), la température de début de réticulation ($T_R$), la pente correspondant à la vitesse de réticulation V (en MPa/min), la variation maximale du module d'élasticité $\Delta E_{max}$ (en MPa) et le module d'élasticité pour une température de 220°C ($E_{220}$). On calcule aussi l'aire sous la courbe, pour les températures entre $T_R$ et 220°C selon la formule suivante :

$$A = (E_{220} - E_{TR}) \times V$$

dans laquelle $E_{220}$ et V ont la signification donnée précédemment et $E_{TR}$ représente le module E à la température $T_R$. Dans le tableau 1 figure le rapport de l'aire A pour chaque exemple à l'aire de l'exemple 8 choisi comme référence ($A_{ref}$).

- l'émission de formaldéhyde est mesurée en disposant environ 3 à 4 g de la solution d'encollage à tester (à environ 30 % d'extrait sec) dans une étuve à 180°C pendant 1 heure sous un balayage d'air (1 l/min). Les vapeurs qui se dégagent de l'étuve sont dirigées vers 2 barboteurs en série contenant de l'eau. Le formaldéhyde piégé est dosé par spectrocolorimétrie et sa teneur est donnée en mg/g de liant réticulé.

**EXEMPLE 1 (hors invention)**

Dans un ballon bicol contenant 15,53 g d'eau, chauffé à 90°C et surmonté d'un réfrigérant à bulles, on introduit 5 g d'acide sulfamique. Lorsque la dissolution de l'acide est complète, on porte la température à 60°C pendant 15 minutes puis on ajoute 7,66 ml de triéthylènetétramine (TETA). Après 15 minutes, on laisse refroidir le mélange et on ajoute à nouveau 38,32 ml de TETA. La solution obtenue contient 1 équivalent de TETA salifiée et 5 équivalents de TETA. Le taux de matières sèches est égal à 76,4%.

Dans un récipient, on verse 5 g d'une solution d'acide butan-1,2,3,4-tétraoïque (BTCA) à 20 % en poids dans l'eau et 0,37 ml de la solution de TETA précitée. Le mélange est agité pendant 15 minutes environ.

On obtient une solution limpide contenant 23,9 % en poids de matières sèches. Le rapport pondéral polyacide carboxylique/polyamine est égal à 81/19.

Les mesures relatives à la réactivité de la solution obtenue et aux propriétés mécaniques du liant sont données dans le Tableau 1.

**EXEMPLE 2 (hors invention)**

Dans un ballon bicol contenant 15,53 g d'eau, chauffé à 90°C et surmonté d'un réfrigérant à bulles, on introduit 5 g d'acide sulfamique. Lorsque la dissolution de l'acide est complète, on porte la température à 60°C pendant 15 minutes puis on ajoute 9,79 ml de tétraéthylènepentamine (TEPA). Après 15 minutes, on laisse refroidir le mélange et on ajoute à nouveau 48,96 ml de TEPA. La solution obtenue contient 1 équivalent de TEPA salifiée et 5 équivalents de TETA. Le taux de matières sèches est égal à 80,3%.

Dans un récipient, on verse 5 g d'une solution d'acide butan-1,2,3,4-tétraoïque (BTCA) à 20 % en poids dans

l'eau et 1,46 ml de la solution de TEPA précitée. Le mélange est agité pendant 15 minutes environ.

On obtient une solution limpide contenant 25 % en poids de matières sèches. Le rapport pondéral polyacide carboxylique/polyamine est égal à 44/56.

Les mesures relatives à la réactivité de la solution obtenue et aux propriétés mécaniques du liant sont données dans le Tableau 1.

**<u>EXEMPLE 3</u>**

Dans un récipient, on verse 8 g d'une solution d'acide tartrique à 30 % en poids dans l'eau et 2 g d'une solution de tétraéthylènepentamine (TEPA) à 30 % en poids dans l'eau. Le mélange est agité pendant 15 minutes environ.

On obtient une solution limpide, de couleur jaune à orange pâle, contenant 30 % en poids de matières sèches. Le rapport pondéral polyacide carboxylique/polyamine est égal à 80/20.

Les mesures relatives à la réactivité et aux propriétés mécaniques sont données dans le Tableau 1.

Les mesures relatives à la réactivité de la solution obtenue et aux propriétés mécaniques du liant sont données dans le Tableau 1.

**<u>EXEMPLE 4</u> (hors invention)**

Dans un récipient, on verse 5,5 g d'une solution de poly(acide acrylique) (poids moléculaire 1500 g/mol) à 30 % en poids dans l'eau et 4,5 g d'une solution de tétraéthylènepentamine (TEPA) à 30 % en poids dans l'eau. Le mélange est agité pendant 15 minutes environ.

On obtient une solution limpide contenant 30 % en poids de matières sèches. Le rapport pondéral polyacide carboxylique/polyamine est égal à 55/45.

Les mesures relatives à la réactivité de la solution obtenue et aux propriétés mécaniques du liant sont données dans le Tableau 1.

**<u>EXEMPLE 5</u> (hors invention)**

Dans un récipient, on verse 3,9 g d'une solution de résine poly(acide acrylique) (Acusol 440® ; commercialisé par ROHM et HAAS ; poids moléculaire 3700 g/mol) à 30 % en poids dans l'eau et 6,1 g d'une solution de tétraéthylènepentamine (TEPA) à 30 % en poids dans l'eau. Le mélange est agité pendant 15 minutes environ.

On obtient une solution limpide contenant 30 % en poids de matières sèches. Le rapport pondéral polyacide carboxylique/polyamine est égal à 39/61.

Les mesures relatives à la réactivité de la solution obtenue et aux propriétés mécaniques du liant sont données dans le Tableau 1.

**<u>EXEMPLE 6</u> (hors invention)**

On prépare différentes compositions d'encollage comprenant des teneurs variables en copolymère acide acrylique-acide maléique (Sokolan® 12S ; BASF) et en tétraéthylènepentamine (TEPA) comme indiqué dans le Tableau 1. Le cas échéant, la composition d'encollage comprend 5 à 10 parties de glycérol pour 100 parties de matières sèches (calculé sur la base du copolymère et de la TEPA). Les mesures relatives à la réactivité des différents encollages et aux propriétés mécaniques des liants sont données dans le Tableau 1.

**<u>EXEMPLE 7 (COMPARATIF)</u>**

On utilise une solution d'encollage comprenant 10 % en poids de résine phénolique conventionnelle obtenue selon l'exemple 1 de EP-A- 0 148 050. La résine est obtenue en condensant du phénol et du formaldéhyde dans un rapport molaire formaldéhyde/phénol égal à 3,5 en présence de NaOH, en ajoutant de l'urée dans la phase de refroidissement et en neutralisant la résine par de l'acide sulfurique.

Les mesures relatives à la réactivité de l'encollage obtenu et aux propriétés mécaniques du liant sont données dans le Tableau 1.

**<u>EXEMPLE 8 (COMPARATIF)</u>**

On utilise une solution de résine polyester obtenue par réaction de polyacide acrylique (poids moléculaire environ 60000) et de triéthanolamine (HF05; commercialisée par ROHM et HAAS).

Les mesures relatives à la réactivité de la solution et aux propriétés mécaniques du liant sont données dans le Tableau 1.

**TABLEAU 1**

| | | | | | | PRE-GELIFICATION | | RETICULATION | | | | |
|---|---|---|---|---|---|---|---|---|---|---|---|---|
| Ex. | Polyacide | Polyamine | % massique (poids sec) | Glycérol | pH | $T_{PG}$ (°C) | ΔEmax (MPa) | $T_R$ (°C) | V (MPa/°C) | $E_{220}$ (MPa) | A/Aref | Formaldéhyde |
| 1 | BTCA | TETA | 81/19 | 0 | 5 | 80 | 1100 | 168 | 31 | 1100 | 1,8 | - |
| 2 | BTCA | TEPA | 44/56 | 0 | - | 80 | 1800 | 170 | 24 | 1800 | 1,4 | - |
| 3 | Ac. tartrique | TEPA | 80/20 | 0 | - | 90 | 186 | 195 | 130 | 3500 | 3,7 | - |
| 4 | Poly(acide acrylique) | TEPA | 55/45 | 0 | - | 80 | 500 | 190 | 186 | 4000 | 6,4 | - |
| 5 | Poly(acide acrylique) | TEPA | 39/61 | 0 | 10,8 | 90 | 500 | 203 | 80 | 3000 | 1,6 | - |
| 6 | Copolymère Ac. Acrylique-Ac. Maléique | TEPA | 36/64 | 0 | 10,0 | 100 | 200 | 176 | 41 | 2500 | 2 | - |
| | | | | 5 | 10,1 | P | < 100 | 171 | 49 | 2300 | 2,7 | - |
| | | | | 10 | 10,2 | A | - | 171 | 49 | 2200 | 2,7 | - |
| | | | 38/62 | 0 | 10,1 | 100 | 200 | 174 | 58 | 2000 | 3,0 | - |
| | | | 40/60 | 0 | 9,8 | 90 | 500 | 170 | 67 | 2000 | 3,8 | 0,06 |
| | | | | 5 | 9,9 | P | 200 | 178 | 124 | 4000 | 6,0 | - |
| | | | 46/54 | 0 | - | 90 | 900 | 181 | 112 | 4000 | 5,0 | 0,04 |
| | | | | 10 | 9,2 | 90 | 150 | 186 | 131 | 2000 | 5,1 | - |
| 7 | - | - | - | - | - | - | 75 | 100 | 157 | 80 | 5,8 | 0,5 |
| 8 | Poly(acide Acrylique) | - | - | - | 3,9 | 100 | 570 | 195 | 35 | 1600 | 1 | 0,05 |

P : progressive
A : aucune

Le rapport A/Aref toujours supérieur à 1 montre que par rapport à la résine polyester de référence, l'encollage selon l'exemple 3 de l'invention a de meilleures performances en termes de réticulation. L'encollage de l'exemple 3 qui a une température $T_R$ du même ordre que celle de l'encollage de référence a cependant une vitesse de réticulation plus importante ce qui est avantageux car il cela permet de pouvoir diminuer le temps de séjour des fibres dans l'étuve de réticulation.

## Revendications

1. Utilisation d'une composition d'encollage aqueuse pour la fabrication d'un produit d'isolation thermique et/ou acoustique à base de fibres minérales, notamment de verre ou de roche, **caractérisée en ce qu'**elle consiste en

   • au moins un polyacide carboxylique choisi parmi l'acide succinique, l'acide glutarique, l'acide adipique, l'acide azélaïque, l'acide sébacique, l'acide tartrique, l'acide phtalique, l'acide tétrahydrophtalique, l'acide citrique, l'acide triméllitique et l'acide butan-1,2,3,4-tétraoïque (BTCA)
   • au moins une polyamine choisie parmi :

   - les composés de formule

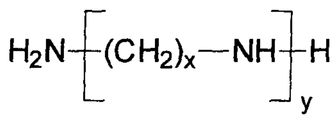

   dans laquelle
   x varie de 2 à 10, de préférence 2 à 4
   y varie de 1 à 10
   - les polyéthylèneimines, les poly(aminostyrène) et les produits de dégradation de la chitine en milieu basique (chitosanes),

   • les additifs suivants, dans les proportions ci-après, exprimées sur la base de 100 parties en poids de matière sèche de polyacide carboxylique et de polyamine :

   - 0 à 20 parties d'une huile, de préférence 6 à 15 parties
   - 0 à 2 parties d'un silane, de préférence de l'ordre de 0,4 partie
   - 0 à 5 parties d'un catalyseur choisi dans le groupe constitué par LiCl, $LiOCOCH_3$, $CaCl_2$, $MgCl_2$, $ZnCl_2$, ZnO et $P(OCH_3)_3$
   - 0 à 20 parties d'un plastifiant,

   • et de l'eau.

2. Utilisation selon la revendication 1, **caractérisée en ce que** le polyacide carboxylique est l'acide citrique, l'acide tartrique ou l'acide butan-1,2,3,4-tétraoïque (BTCA),

3. Utilisation selon la revendication 1 ou 2, **caractérisée en ce que** la polyamine a une fonctionnalité, exprimée par le nombre de fonctions amines, égale ou supérieure à 2, de préférence inférieure à 200.

4. Utilisation selon la revendication 1 ou 2, **caractérisée en ce que** la polyamine a une masse moléculaire inférieure à 1000 g/mol, de préférence Inférieure à 500 g/mol.

5. Utilisation selon l'une des revendications 1 à 4, **caractérisée en ce qu'**elle comprend, exprimées en parties de matière sèche, de 20 à 80 parties en poids de polyacide carboxylique et de 80 à 20 parties en poids de polyamine.

6. Fibres minérales liées entre elles grâce à l'utilisation de la composition d'encollage selon l'une des revendications 1 à 5.

**7.** Fibres minérales selon la revendication 6, **caractérisées en ce qu'**elles sont constituées de verre ou d'une roche.

**8.** Produit d'isolation thermique et/ou acoustique constitué essentiellement de fibres minérales selon l'une des revendications 6 ou 7.

**9.** Voile de fibres minérales, notamment de fibres de verre, caractérisé en **ce qu**'il comprend des fibres selon la revendication 6 **et qu**'il possède un grammage compris entre 10 et 300 g/$m^2$.

## Patentansprüche

**1.** Verwendung einer wässrigen Schlichtezusammensetzung für die Herstellung eines Wärme- und/oder Schalldämmproduktes auf Basis von Mineralfasern, insbesondere Glas- oder Steinfasern, **dadurch gekennzeichnet, dass** sie

- mindestens eine Polycarbonsäure aufweist, die ausgewählt ist unter Bernsteinsäure, Glutarsäure, Adipinsäure, Azelainsäure, Sebacinsäure, Weinsäure, Phthalsäure,Tetrahydrophthalsäure, Ztironensäure, Trimellithsäure und Butan-1,2,3,4-tetracarbonsäure (BTCA)
- mindestens ein Polyamin, das ausgewählt ist unter:

  - Zusammensetzungen der Formel

$$H_2N-\left[(CH_2)_x-NH\right]_y-H$$

,

  wobei
  x in einem Bereich von 2 bis 10, bevorzugt von 2 bis 4 liegt
  y in einem Bereich von 1 bis 10 liegt
  - Polyethyleniminen, Poly(aminstyrolen) und den Abbauprodukten von Chitin im basischen Milieu (Chitosanen)

- die folgenden Additive in den angegebenen Anteilen bezogen auf 100 Gewichtsteile Trockenmasse von Polycarbonsäure und Polyamin aufweist

  - 0 bis 20 Teile eines Öls, bevorzugt 6 bis 15 Teile
  - 0 bis 2 Teile eines Silans, bevorzugt in der Größenordnung von 0,4 Teilen
  - 0 bis 5 Teile eines Katalysators ausgewählt aus der Gruppe aus LiCl, $LiOCOCH_3$, $CaCl_2$, $MgCl_2$, $ZnCL_2$, ZnO und $P(OCH_3)_3$
  - 0 bis 20 Teile eines Weichmachers.

- und Wasser

**2.** Verwendung nach Anspruch 1, **dadurch gekennzeichnet, dass** die Polycarbonsäure Zitronensäure, Weinsäure oder Butan-1,2,3,4-tetracarbonsäure (BTCA) ist.

**3.** Verwendung nach Anspruch 1 oder 2, **dadurch gekennzeichnet, dass** das Polyamin eine durch die Anzahl von Aminfunktionen ausgedrückte Funktionalität gleich oder größer als 2, bevorzugt von weniger als 200, besitzt.

**4.** Verwendung nach Anspruch 1 oder 2, **dadurch gekennzeichnet, dass** das Polyamin eine Molekularmasse von weniger als 1000 g/mol, bevorzugt weniger als 500 g/mol besitzt.

**5.** Verwendung nach einem der Ansprüche 1 bis 4, **dadurch gekennzeichnet, dass** sie als Trockenmasseanteile ausgedrückt 20 bis 80 Gewichtsteile Polycarbonsäure und 80 bis 20 Gewichtsteile Polyamin aufweist.

6. Mineralfasern, die mithilfe der Verwendung der Schlichtezusammensetzung nach einem der Ansprüche 1 bis 5 untereinander gebunden sind.

7. Mineralfasern nach Anspruch 6, **dadurch gekennzeichnet, dass** sie aus Glas oder einem Gestein bestehen.

8. Wärme- und/oder Schalldämmprodukt, das im Wesentlichen aus Mineralfasern nach einem der Ansprüche 6 oder 7 besteht.

9. Mineralfaserschleier, insbesondere Glasfaserschleier, **dadurch gekennzeichnet, dass** er Fasern nach Anspruch 6 aufweist, und dass er eine flächenbezogene Masse von zwischen 10 und 300 g/m2 besitzt.

## Claims

1. Use of an aqueous sizing composition for the manufacture of a thermal and/or acoustic insulation product based on mineral fibers, especially glass fibers or rock fibers, **characterized in that** it consists of

    • at least one polycarboxylic acid chosen from succinic acid, glutaric acid, adipic acid, azelaic acid, sebacic acid, tartaric acid, phthalic acid, tetrahydrophthalic acid, citric acid, trimellitic acid and 1,2,3,4-butanetetracarboxylic acid (BTCA),
    • at least one polyamine chosen among:

        - compounds of formula:

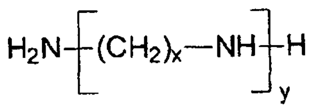

        in which:

        x varies from 2 to 10, preferably 2 to 4 and
        y varies from 1 to 10;
        - polyethyleneimines, polyaminostyrenes and products resulting from the degradation of chitin in basic medium (chitosans),

    • the following additives, in the following proportions, expressed on the basis of 100 parts by weight of dry matter of polycarboxylic acid and of polyamine:

        - from 0 to 20 parts, preferably 6 to 15 parts, of an oil;
        - 0 to 2 parts, preferably 0.4 parts, of a silane;
        - 0 to 5 parts of a catalyst chosen from the group consisting of LiCl, $LiOCOCH_3$, $CaCl_2$, $MgCl_2$, $ZnCl_2$, ZnO and $P(OCH_3)_3$;
        - 0 to 20 parts of a plasticizer;

    • and water.

2. Use as claimed in claim 1, **characterized in that** the polycarboxylic acid is citric acid, tartaric acid or 1,2,3,4-butanetetracarboxylic acid (BTCA).

3. Use as claimed in claim 1 or 2, **characterized in that** the polyamine has a functionality, expressed by the number of amine functional groups, equal to or greater than 2, preferably less than 200.

4. Use as claimed in claim 1 or 2, **characterized in that** the polyamine has a molecular mass of less than 1000 g/mol, preferably than 500 g/mol.

5. Use as claimed in one of claims 1 to 4, **characterized in that** the composition comprises, expressed in parts of dry matter, from 20 to 80 parts by weight of polycarboxylic acid and from 80 to 20 parts by weight of polyamine.

**6.** Mineral fibers bonded together owing to the use of the sizing composition as claimed in one of claims 1 to 5.

**7.** The mineral fibers as claimed in claim 6, **characterized in that** they consist of glass or rock.

**8.** A thermal and/or acoustic insulation product essentially consisting of mineral fibers as claimed in either of claims 6 or 7.

**9.** A veil of mineral fibers, especially glass fibers, **characterized in that** it comprises fibers as claimed in claim 6 and **in that** it has a grammage of between 10 and 300 $g/m^2$.

**Figure 1**

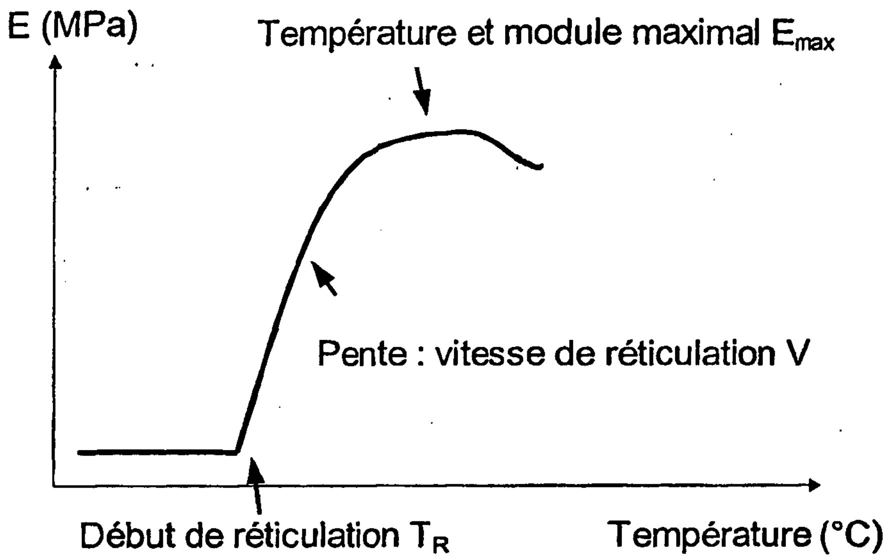
E (MPa)
Température et module maximal Emax
Pente : vitesse de réticulation V
Début de réticulation TR
Température (°C)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0990727 A
- EP 0990728 A
- EP 0990729 A
- WO 9336368 A
- EP 1164163 A
- EP 1170265 A
- EP 1086932 A
- EP 0148050 A